# EUROPÄISCHE PATENTANMELDUNG

(11) **EP 1 162 488 A2**
(43) Veröffentlichungstag der Anmeldung: **12.12.2001**
(21) Anmeldenummer: 01112747.9
(22) Anmeldetag: 25.05.2001
(51) Int. Cl.: G02B 6/44

(54) **Optisches Luftkabel und zugehöriges Herstellungsverfahren**

(30) Priorität: 09.06.2000 DE 10028562
(71) Anmelder: CCS Technology Inc., Wilmington, DE 19803 (GB)
(72) Erfinder: Schneider, Reiner, 96237 Ebersdorf (DE); Stöcklein, Waldemar, Dr., 96450 Coburg (DE)
(74) Vertreter: Epping Hermann & Fischer

(57) **Zusammenfassung**

Neben den durch Wind, Eislasten usw. hervorgerufenen machanischen Belastungen muß der Hersteller eines optischen Luftkabels auch den zu einer vorzeitigen Alterung des Außenmantels führenden elektrischen Stressmechanismen (Corona-Entladungen, "Tracking"-Effekt) durch konstruktive Maßnahmen und die Verwendung spezieller Mantelmaterialien Rechnung tragen. Der Außenmantel (6) des Luftkabels (1) enthält mehrere, in das Mantelmaterial eingebettete PE-Schmelzefäden (7/7'), deren elektrische Leitfähigkeit auf dem Gehalt von 10 Gew% bis 40 Gew% Ruß beruht. Der elektrische Widerstand dieser durch Koextrusion mit dem Außenmantel (6) hergestellten Schmelzefäden (7/7') ist mit 10⁵ Ω/m - 10⁹ Ω/m ausreichend niedrig, um die induzierten elektrischen Ladungen sicher zu den am Mast befestigten Abspannspiralen abzuleiten. Auch auf der noch nassen, nur teilweise abgetrockneten Manteloberfläche können somit keine größeren Potentialdifferenzen in Kabellängsrichtung auftreten.

## Beschreibung

Die Verlegung von Lichtwellenleiter-Luftkabeln in ihren Mittel- und Hochspannungstrassen ermöglicht es Energieversorgungsunternehmen, alle Ballungszentren einer Region sowie deren größeren Städte und Gemeinden unter Umgehung der Netze staatlicher und/oder privater Telekommunikationsgesellschaften nachrichtentechnisch miteinander zu verbinden.

Zum Einsatz kommen hierbei insbesondere selbsttragende, d.h. eigenständig abspannbare Luftkabel und sogenannte ADL-Kabel (All-Dielectric-Lash). Während selbsttragende Luftkabel mit nichtmetallischen Zugentlastungselementen (All-Dielectric-Self-Supporting- oder ADSS-Kabel) oder mit einem die Zugkräfte aufnehmenden Trägerseil (Figur-8-Kabel) ausgestattet sind, besitzen ADL-Kabel keine eigenen Tragelemente. Sie werden üblicherweise mittels eines Klebe- oder Laschbandes an einem bereits montierten Erd- oder Phasenseil der Hochspannungs-Freileitung befestigt. Eine optische Luftkabel betreffende Übersicht findet sich beispielsweise in G. Mahlke; P. Gössing: "Lichtwellenleiterkabel"; Publicis MCD Verlag; 5. Auflage 1998, S. 157 - 162.

Wie die Erd- und Phasenseile, unterliegt auch das zwischen den Masten einer Hochspannungs-Freileitung abgespannte ADSS-Kabel erheblichen, durch Wind, Vereisung oder große Temperaturschwankungen hervorgerufenen mechanischen Belastungen. Neben der geforderten Zugfestigkeit muß der Kabelhersteller auch den zu einer beschleunigten Alterung und letztendlich zur Beschädigung bzw. Zerstörung des Kabelmantels führenden elektrischen Streßmechanismen, also insbesondere der Corona-Entladung im Bereich der Abspannspiralen und dem sogenannten Tracking-Effekt ("dry-band-arcing") durch konstruktive Maßnahmen und die Verwendung spezieller Mantelmaterialien Rechnung tragen.

Zur Unterdrückung dieser Effekte wurde u.a. vorgeschlagen,
- den Mantel des Luftkabels aus einem selbstlöschenden, teilentladungs- und kriechstromfesten Kunststoff zu fertigen oder ihn mit einer Tracking-resistenten Außenschicht zu versehen (siehe US 4,673,247 und WO 99/04300),
- die als zugfeste Elemente dienenden Aramidgarne mit einer schwach leitenden Flüssigkeit zu tränken (siehe US 4,776,665) und
- elektrisch leitende, nicht miteinander verbundene, in axialer Richtung teilweise überlappende Elemente zwischen der Kabelseele und dem Außenmantel anzuordnen (siehe EP 0 695 431 B1).

In US 5,563,976 wird angeregt, die durch kapazitive Aufladung des ADSS-Kabels induzierten Ladungen mittels mehrerer, die Kabelseele spiral- oder wendelförmig umschlingender, kohlenstoffhaltiger Faserstränge zum Mast abzuleiten. Die zwischen 65 Gew.% und 92 Gew.% Kohlenstoff enthaltenden Faserstränge erzeugt man vergleichsweise aufwendig durch Pyrolyse von Polyacrylonnitril. Außerdem läßt sich die den Spannungsverlauf entlang des Kabels beeinflussende Verteilung der Faserstränge im Luftkabel nicht oder nur unzureichend den jeweiligen Gegebenheiten und/oder Vorgaben anpassen.

Gegenstand der Erfindung ist ein vielseitig einsetzbares Luftkabel, insbesondere ein im elektrischen Feld einer Hochspannungs-Freileitung abspannbares, rein dielektrisches optisches Nachrichtenkabel, dessen Mantel eine hohe Lebensdauer aufweist. Außerdem soll sich das Kabel vergleichsweise einfach, variabel und kostengünstig herstellen lassen.

Diese Anforderungen werden erfüllt durch ein Luftkabel, enthaltend: mindestens ein in einer Schutzhülle angeordnetes optisches Übertragungselement, mindestens ein zugfestes Element, einen Außenmantel und mehrere, in das Mantelmaterial vollständig eingebettete, strang- oder fadenförmige Elemente, wobei die strang- oder fadenförmigen Elemente aus einem halbleitende Eigenschaften aufweisenden Polymer oder einer halbleitende Eigenschaften aufweisenden Polymermischung bestehen und der elektrische Widerstand des Polymers oder der Polymermischung im Bereich von 10⁵ Ω/m und 10⁹ Ω/m liegt.

Die abhängigen Patentansprüche haben bevorzugte Ausgestaltungen und Weiterbildungen des Luftkabels zum Gegenstand. Ein Verfahren zur Herstellung eines solchen Kabels erfolgt durch Versehen einer mindestens ein optisches Übertragungselement enthaltenden Kabelseele mit einem Außenmantel, wobei mehrere schmelzflüssige Stränge oder Fäden aus einem halbleitende Eigenschaften aufweisenden Polymer oder einer halbleitende Eigenschaften aufweisenden Polymermischung durch Anwendung der Technik der Koextrussion in das schmelzflüssige Mantelmaterial eingebettet werden.

In einem gemäß der Erfindung aufgebauten Luftkabel werden die induzierten elektrischen Ladungen mittels halbleitender, in den PE-Mantel vollständig eingebetteter Schmelzefäden zu den am Mast befestigten, auf Erdpotential liegenden Abspannspiralen abgeleitet. Auch auf der noch nassen und nur stellenweise abgetrockneten Manteloberfläche können somit keine größeren Potentialdifferenzen in Längsrichtung des Kabels auftreten. Außerdem lassen sich die Schmelzefäden in einfacher Weise in der gewünschten Anzahl, der erforderlichen Dicke und mit vorgegebenen radialen Abstand zur Kabellängsachse exakt parallel zur Kabellängsachse verlaufend in das Mantelmaterial einbetten. Letzteres trägt wesentlich zur Homogenisierung des Feldverlaufs entlang des Kabels bei.

Die Erfindung wird im folgenden anhand von Ausführungsbeispielen und diesen Ausführungsbeispielen zugeordnete Zeichnungen erläutert. Es zeigen:
- Figur 1: ein gemäß der Erfindung aufgebautes ADSS-Luftkabel im Querschnitt,
- Figur 2: eine Vorrichtung zur Abspannung des ADSS-Luftkabels am Mast einer Hochspannungs-Freileitung,
- Figur 3: ein zweites Ausführungsbeispiel eines ADSS-Luftkabels im Querschnitt und
- Figur 4: ein erfindungsgemäßes ADL-Kabel im Querschnitt.

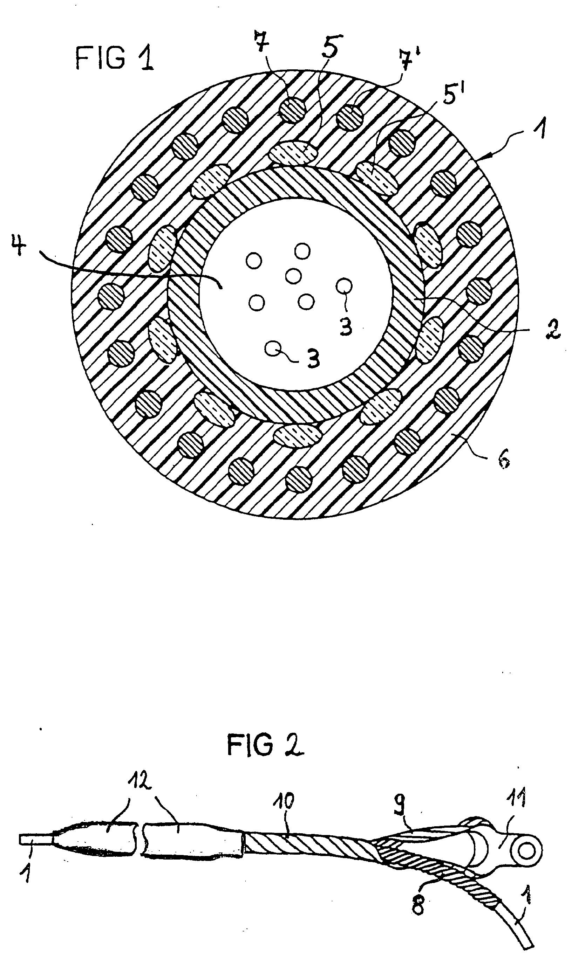

Grundelement des in Figur 1 nicht maßstabsgetreu dargestellten, selbsttragenden, rein dielektrischen Luftkabels 1 (ADSS-Kabel) ist die zentral angeordnete Maxibündelader 2 (Außendurchmesser ∅ ≈ 6 mm), deren als Schutzhülle für die 12 - 48 Lichtwellenleiter 3 (LWL) dienender Mantel aus einem extrudierbaren, vergleichsweise harten Kunststoff besteht. Als Hüllenmaterialien eignen sich insbesondere Polyamid (PA), Polypropylen (PP) und Polybutylentherephthalat (PBTP). Soll eine zweischichtige Schutzhülle zum Einsatz kommen, können deren Innenschicht beispielsweise aus Polycarbonat (PC), die aufextrudierte Außenschicht aus PBTP gefertigt sein.

Die gegebenenfalls miteinander verseilten und jeweils aus einem Glaskern (Brechungsindex n_{K}), einem Glasmantel ("Cladding"; Brechungsindex n_{C} < n_{K}) und einer äußeren, üblicherweise eingefärbten Lackschicht ("Coating"; Brechungsindex n_{Coa} > n_{K}) bestehenden Lichtwellenleiter 3 sind mit Überlänge (≈ 5 ‰) in der rohrförmigen Schutzhülle der Maxibündelader 2 angeordnet und damit auch im abgespannten ADSS-Kabel 1 keinen oder nur schwachen Zugkräften ausgesetzt. Eine chemisch neutrale, im Temperaturbereich zwischen -40°C und +70°C nicht tropfende oder gefrierende, leicht thixotrope Substanz 4 verhindert, daß Wasser in die Bündelader 2 eindringen und sich in Richtung der Kabellängsachse ausbreiten kann.

Die auf das ADSS-Kabel 1 wirkenden Zugkräfte werden von den symmetrisch bezüglich der Kabellängsachse angeordneten, im Querschnitt elliptischen oder kreisförmigen und beispielsweise aus gebündelten Aramidgarnen oder -fäden (Kevlar) bestehenden Elementen 5/5' aufgenommen. Um deren Flexibilität bzw. Biegbarkeit zu erhalten, muß der Kabelhersteller dafür Sorge tragen, daß die Aramidgarne bzw. -fäden und das aufextrudierte Mantelmaterial nicht miteinander verbacken. Anstelle von Aramidgarnen lassen sich selbstverständlich auch andere zugfeste Materialien, insbesondere Glasfasern (Rovings) oder ultrahochmolekulare Polyolefinfasern (Handelsname "Dynema") verwenden.

Der beispielsweise 1,7 mm dicke Außenmantel 6 des Luftkabels 1 besteht vorzugsweise aus Polyethylen (PE), insbesondere dem mit Hilfe von Katalysatoren in einem speziellen Niederdruckverfahren hergestellten LMDPE (Linear-Medium-Density-PE). Das stark beanspruchte, der Witterung und intensiver Sonnenstrahlung ausgesetzte PE enthält die üblichen Zusätze und Additive wie Ruß, Antioxidationsmittel, Degradationshemmer, Pigmente usw. in den für die jeweilige Anwendung erforderlichen Mengen (siehe beispielsweise WO 99/04300).

Um die durch das elektrische Feld der Phasenseile im ADSS-Kabel 1 induzierten Ladungen über die auf Erdpotential liegenden, am Mast befestigten Abspannspiralen (Figur 2) abzuleiten, enthält der Außenmantel 6 mehrere, aus fertigungstechnischen Gründen vorzugsweise parallel ausgerichtete und symmetrisch bezüglich der Kabellängsachse angeordnete Schmelzefäden 7/7', deren elektrischer Widerstand im Bereich zwischen 10⁵ Ω/m und 10⁹ Ω/m liegt. Die Leitfähigkeit der aus einem Polymer oder einer Polymermischung (Compound) bestehenden Schmelzefäden 7/7' beruht im wesentlichen auf dem Gehalt von Kohlenstoff bzw. Ruß, dessen Anteil an der Polymermatrix 10 Gew% bis max. 40 Gew% beträgt. Zu einer besonders innigen und damit dauerhaften Verbindung zwischen dem als Mantelmaterial dienenden PE und den darin vollständig eingebetteten, im gezeigten Ausführungsbeispiel N = 20, jeweils 0,1 mm dicken Schmelzefäden 7/7' kommt es, wenn auch die Schmelzefäden 7/7' aus PE bestehen, bzw. PE mit ca. 50 - 90 Gew% die Hauptkomponente der Polymermischung bildet. Durch den Zusatz von 0,1 Gew% Polyorganosiloxan ("Silikon") läßt sich die Temparaturbeständigkeit der Schmelzefäden 7/7' verbessern. Außerdem kann das Polymer oder die Polymermischung noch ein Antioxydationsmittel (z.B. Irganox 1010) mit einem Anteil von 0,1 - 0,2 Gew% enthalten.

Die Einbettung der beispielsweise N = 2 - 100 und etwa 0,1 mm - 1 mm dicken Schmelzefäden 7/7' in das noch schmelz- oder zähflüssige Mantelmaterial erfolgt durch Anwendung der Technik der Koextrusion unter Verwendung der in US 5,932,149 oder US 5,360,497 beschriebenen Extruderköpfe. Die Anzahl der zu erzeugenden Schmelzefäden 7/7' und deren Querschnittsfläche sind hierbei so zu bemessen, daß eine sichere Ableitung der induzierten Ladungen, also eine ausreichend hohe elektrische Leitfähigkeit gewährleistet ist, der Außenmantel 6 als solcher aber noch einen hohen elektrischen Widerstand von beispielsweise 10¹² Ω/m in Kabellängsrichtung aufweist.

In Tabelle 1 sind einige weitere, das ADSS-Kabel 1 kennzeichnenden konstruktiven Merkmale und mechanische Daten angegeben:

**Tabelle 1:**

| (ADSS-Kabel) | |
|---|---|
| Querschnittsfläche der Aramidgarne | 7,2 - 36 mm² |
| Außendurchmesser | 9,6 - 13,9 mm |
| Wärme-Dehnungskoeffizient | -2 x 10⁻⁶/K |
| Elastizitätsmodul | 120 kN/mm² |
| berechnete Reisskraft | 17 - 86 kN |
| Kabelgewicht | 70 - 190 kg/km |
| max. Zugbelastbarkeit | 3500 - 24000 N |
| max. Biegeradius | 145 - 210 mm |

Die Figur 2 zeigt eine Einrichtung zur Abspannung des ADSS-Kabels 1 am Mast einer Hochspannungsfreileitung. Sie besteht aus der sog. Schutzspirale 8 mit einer Vielzahl, den Kabelmantel wendelförmig eng umschlingenden Metalldrähten, der ebenfalls aus Metall gefertigten, mastseitig in einen schlauchförmigen Ansatz 9 übergehenden Abspannspirale 10 sowie der den schlauchförmigen Ansatz 9 haltenden, am Mast befestigten und damit auf Masse liegenden Kausche 11. Ein geerdeter, der Feldsteuerung dienender Schrumpfschlauch 12 baut Spannungsspitzen im Bereich des Übergangs von Luftkabel 1 zu Abspannspirale 10 ab und verhindert damit Corona-Entladungen. Der vorzugsweise aus einem halbleitenden Polyolefin-Compound bestehende Schrumpfschlauch 12 ist kabelseitig mit einer leitfähigen Schmelzkleberbeschichtung versehen. Die Dicke dieser kabelseitigen Beschichtung ist hierbei so bemessen, daß der beim Aufbringen des Schrumpfschlauches 12 erwärmte und dadurch verflüssigte Schmelzkleber in die zwischen Schrumpfschlauch 12, Schutzspirale 8 und ADSS-Kabel 1 vorhandenen Hohlräume eindringt und diese vollständig ausfüllt. Der Schrumpfschlauch 12 oder eine ebenfalls einsetzbare Schrumpfmanschette reicht über das Ende der Schutzspirale 8 hinaus und umschließt das ADSS-Kabel 1 noch auf einer Länge von mindestens 5 - 100 cm. Um das Abfließen der induzierten Ladungen von den Schmelzefäden 7/7' zur Abspannspirale 10 zu erleichtern, kann die Leitfähigkeit des Kabelmantels 6 durch einen höheren Rußanteil verbessert werden.

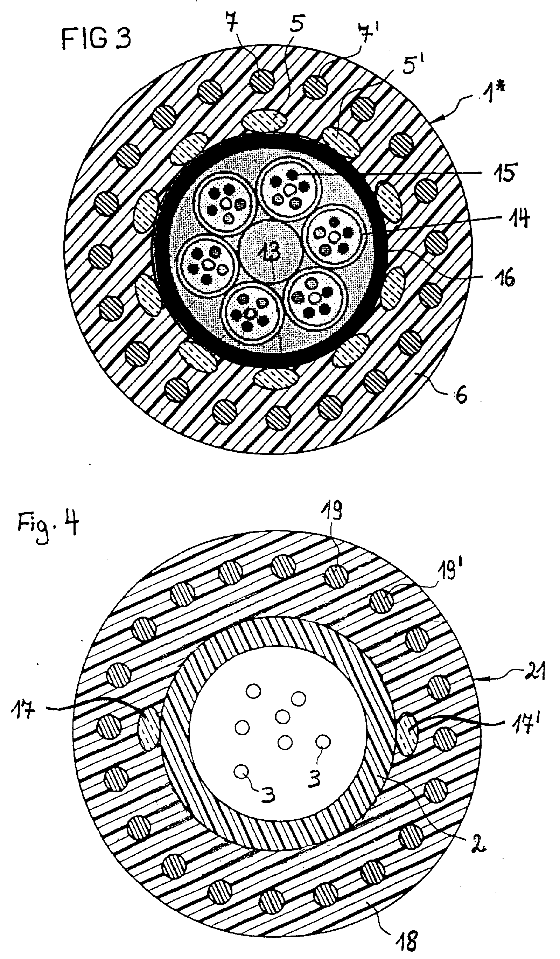

Das in Figur 3 im Querschnitt dargestellte ADSS-Kabel 1* unterscheidet sich im wesentlichen nur im Aufbau seiner Seele von dem oben beschriebenen Luftkabel 1. Diese besteht aus einem zentralen Stützelement 13 (gegebenenfalls ummantelter Stab aus glasfaserverstärkten Kunststoff), mehreren darauf aufgeseilten Lichtwellenleiterhohl- oder Bündeladern 14 (Mantelmaterial PBTP) mit jeweils N = 1 (Hohlader; Außendurchmesser ∅ = 1,4 mm) bzw. N = 2 - 12 (Bündelader; Außendurchmesser ∅ = 1,8 - 3,5 mm), in eine thixotrope Masse eingebetteten, Ein- oder Mehrmoden Lichtwellenleiter 15 und einem rußgeschwärzten PE-Innenmantel 16 bzw. einer Seelenbespinnung. Mit 5/5' sind wieder die die Zugkräfte aufnehmenden Aramidgarne, mit 6 der MDPE-Außenmantel und mit 7/7' die durch Koextrusion in das Mantelmaterial eingebetteten, Kohlenstoff bzw. Ruß enthaltenden Schmelzefäden bezeichnet.

Die Figur 4 zeigt ein erfindungsgemäßes ADL-Kabel 21 im Querschnitt. Es besteht aus der schon erwähnten Maxibündelader 2, den beiden diagonal gegenüberliegend angeordneten Zugentlastungselementen 17/17' (Aramidgarne) und einem PE-Außenmantel 18 mit den darin eingebetteten, kohlenstoffhaltigen Schmelzefäden 19/19'. Einige weitere, das ADL-Kabel 21 charakterisierenden konstruktiven Merkmale und mechanische Daten sind in Tabelle 2 angegeben.

**Tabelle 2:**

| (ADL-Kabel) | |
|---|---|
| Anzahl der LWL | 12 - 48 |
| Kabeldurchmesser | 5,9 - 6,5 mm |
| Kabelgewicht | 27 - 34 kg/km |
| max. Zugbelastbarkeit | 100 N |
| min. Biegeradius | 130 mm |

Die Erfindung beschränkt sich selbstverständlich nicht auf die oben beschriebenen Ausführungsbeispiele. So sind folgende Ausgestaltungen und Weiterbildungen ohne weiteres möglich,
- den Außenmantel des Kabels nicht aus PE (LDPE, MDPE, LDPE, LLDPE), sondern aus Polypropylen (PP), Copolymeren des Propylens mit einem anderen Olefin oder Ethylen - Vinylazetat (EVA) zu fertigen,
- die halbleitenden Schmelzefäden spiralförmig längs der Ka belachse verlaufend in den Kabelmantel einzubetten,
- das PE-Compound LE 0563 der Firma Borealis Deutschland GmbH als Material für die halbleitenden Schmelzefäden zu verwenden,
- die halbleitenden Schmelzfäden aus 10 - 40 Gew% Kohlenstoff oder Ruß enthaltendem PP zu fertigen
- mehrere, konzentrisch bezüglich der Kabellängsachse angeordnete Lagen von halbleitenden Schmelzefäden im Außenmantel vorzusehen,
- die Lichtwellenleiter in den Bündeladern zu verseilen,
- LWL-Bändchen, d.h. mehrere, insbesondere bis zu 16 parallel ausgerichtete und durch eine äußere Hülle mechanisch zusammengehaltene LWL oder LWL-Bändchen stapelförmig in den gefüllten oder ungefüllten Bündeladern anzuordnen,
- mehrere Lagen von Bündel- oder Hohladern auf das Zentralelement aufzuseilen und
- ein mehrere, jeweils nach Außen offene, spiral- oder wendelförmig umlaufende Kammern aufweisendes Zentralelement in der Kabelseele vorzusehen ("Kammerkabel").

## Patentansprüche

1. Luftkabel, enthaltend:
- mindestens ein in einer Schutzhülle (2, 16) angeordnetes optisches Übertragungselement (3),
- mindestens ein zugfestes Element (5/5', 17/17'),
- einen Außenmantel (6) und
- mehrere, in das Mantelmaterial vollständig eingebettete, strang- oder fadenförmige Elemente (7/7', 19/19'), wobei die strang- oder fadenförmigen Elemente (7/7', 19/19') aus einem halbleitende Eigenschaften aufweisenden Polymer oder einer halbleitende Eigenschaften aufweisenden Polymermischung bestehen und der elektrische Widerstand des Polymers oder der Polymermischung im Bereich von 10⁵ Ω/m und 10⁹ Ω/m liegt.

2. Luftkabel nach Anspruch 1,
**dadurch gekennzeichnet,**
**daß** die strang- oder fadenförmigen Elemente (7/7', 19/19') gleichzeitig mit dem Außenmantel (6) durch Koextrussion hergestellt sind.

3. Luftkabel nach Anspruch 1 oder 2,
**dadurch gekennzeichnet,**
**daß** die halbleitenden Eigenschaften des Polymers oder der Polymermischung auf dem Zusatz von Kohlenstoff oder Ruß beruhen.

4. Luftkabel nach Anspruch 3,
**dadurch gekennzeichnet,**
**daß** der Anteil des Kohlenstoffs oder des Rußes in der Polymermatrix 10 Gew.% bis maximal 40 Gew.% beträgt.

5. Luftkabel nach einem der Ansprüche 1 bis 4,
**dadurch gekennzeichnet,**
**daß** dem Polymer oder die Polymermischung Polyorganosiloxan beigemischt ist.

6. Luftkabel nach einem der Ansprüche 1 bis 5,
**dadurch gekennzeichnet,**
**daß** die strang- oder fadenförmigen Elemente (7/7', 19/19') zu mehr als 50 Gew.% aus PE oder PP bestehen.

7. Luftkabel nach einem der Ansprüche 1 bis 6,
**dadurch gekennzeichnet,**
**daß** die strang- oder fadenförmigen Elemente (7/7', 19/19') parallel ausgerichtet und symmetrisch bezüglich der Längsachse des Luftkabels im Außenmantel (6) angeordnet sind.

8. Luftkabel nach Anspruch 7,
**dadurch gekennzeichnet,**
**daß** die faden- oder strangförmigen Elemente (7/7', 19/19') radial in der Mitte des Außenmantels (6) angeordnet sind.

9. Luftkabel nach einem der Ansprüche 1 bis 8,
**dadurch gekennzeichnet,**
**daß** der Durchmesser der strang- oder fadenförmigen Elemente (7/7', 19/19') im Bereich von 0,01 mm bis 1 mm liegt und deren Anzahl N = 1 bis 100, vorzugsweise N = 2 - 50 beträgt.

10. Luftkabel nach einem der Ansprüche 1 bis 9,
**dadurch gekennzeichnet,**
**daß** der Außenmantel (6) aus einem Polyolefin oder Copolymeren verschiedener Olefine besteht.

11. Luftkabel nach Anspruch 10,
**dadurch gekennzeichnet,**
**daß** der Außenmantel (6) aus HDPE, MDPE, LDPE, LLDPE, PP oder EVA besteht.

12. Luftkabel nach einem der Ansprüche 1 bis 11,
**dadurch gekennzeichnet,**
**daß** das optische Übertragungselement (3) mit Überlänge in der rohrförmigen Schutzhülle (2, 14) angeordnet ist.

13. Luftkabel nach einem der Ansprüche 1 bis 12,
**dadurch gekennzeichnet,**
**daß** die Schutzhülle (2, 14) mit einer gelartigen, thixotrope Eigenschaften aufweisenden Substanz oder Masse gefüllt ist.

14. Luftkabel nach einem der Ansprüche 1 bis 13,
**dadurch gekennzeichnet,**
**daß** mehrere zugfeste Elemente (5/5', 17/17') zwischen der Schutzhülle (2) und dem Außenmantel (6) symmetrisch bezüglich der Kabellängsachse angeordnet sind.

15. Verfahren zur Herstellung eines Luftkabels durch Versehen einer mindestens ein optisches Übertragungselement (3) enthaltenden Kabelseele mit einem Außenmantel (6), wobei mehrere schmelzflüssige Stränge oder Fäden (7/7', 19/19') aus einem halbleitende Eigenschaften aufweisenden Polymer oder einer halbleitende Eigenschaften aufweisenden Polymermischung durch Anwendung der Technik der Koextrussion in das schmelzflüssige Mantelmaterial eingebettet werden.
